# EUROPÄISCHE PATENTSCHRIFT

(11) **EP 0 775 316 B1**
(45) Veröffentlichungstag und Bekanntmachung des Hinweises auf die Patenterteilung: **13.10.1999**
(21) Anmeldenummer: 95911257.4
(22) Anmeldetag: 23.02.1995
(51) Int. Cl.: G01P 5/12

(54) **VERFAHREN ZUR BEFESTIGUNG EINER SENSORANORDNUNG FÜR HEISSFILMANEMOMETER**
METHOD OF MOUNTING A SENSOR ARRANGEMENT FOR A HOT-FILM ANEMOMETER
PROCEDE DE MONTAGE D'UNE RESISTANCE SERIE POUR ANENOMETRE A PELLICULE CHAUFFANTE

(30) Priorität: 28.02.1994 DE 4406331
(43) Veröffentlichungstag der Anmeldung: 28.05.1997
(73) Patentinhaber: Heraeus Electro-Nite International N.V., 3530 Houthalen (BE); Pierburg Aktiengesellschaft, 41460 Neuss (DE)
(72) Erfinder: WIENAND, Karlheinz, D-63741 Aschaffenburg (DE); DIETMANN, Stefan, D-72221 Haiterbach (DE); KOCH, Christian, D-63801 Kleinostheim (DE); LÖSING, Karl-Heinrich, D-46519 Alpen (DE); WITKOWSKI, Peter, D-41363 Jüchen (DE)
(74) Vertreter: Kühn, Hans-Christian
(86) Internationale Anmeldenummer: EP9500659
(87) Internationale Veröffentlichungsnummer: WO9523338

(56) Entgegenhaltungen:
- EP-A- 0 522 386
- DE-A- 3 040 448
- DE-A- 4 207 676
- DE-U- 9 011 927
- GB-A- 2 201 000

## Beschreibung

Die Erfindung betrifft ein Verfahren zur Befestigung und Isolation wenigstens eines Anschlußbereichs eines langgestreckten Heizwiderstandes und/oder eines langgestreckten Temperaturmeßwiderstandes in Befestigungsbereichen auf einer rahmenartigen Trägerplatte einer Sensoranordnung für Heißfilmanemometer.

Eine solche Sensoranordnung für Heißfilmanemometer enthält einen Meßwiderstand und einen mittels regelbarer Stromversorgung versorgten flächenhaften langgestreckten Heizwiderstand als Heißfilm, dessen Temperatur im Betriebszustand um einen fest vorgegebenen Differenzbetrag gegenüber der vom Meßwiderstand ermittelten Temperatur erhöht ist; dabei ist der Heizwiderstand brückenartig in einer Ausnehmung einer Trägerplatte in einer Halterung geringer Wärmeübertragung befestigt, die zwei sich gegenüberliegende Befestigungsbereiche zur Halterung jeweils der Enden des Heizwiderstandes enthält.

Aus der EP 0 522 386 A1 ist ein Luftmassenstrommesser als Heißfilmanemometer mit einem Venturirohr bekannt, das durch in radialer Richtung verlaufende Rippen in einem Rohrgehäuse gehalten wird, wobei eine der Rippen hohl ausgebildet ist und in einer so gebildeten Rippenausnehmung ein Rahmenträger mit zwei als Halbleiter-Chips ausgebildeten Widerständen in den Venturirohr-Kanal hineinragt. Die Widerstände sind durch Arretiernasen in ihrer brückenbildenden Position gehalten.

Als problematisch kann sich die Wärmeisolation zwischen den Widerständen und dem Rahmenträger erweisen, so daß durch Wärmeübergang vom Widerstand zur Halterung die Genauigkeit bei der Ermittlung des Luftmassenstroms beeinträchtigt werden kann.

Weiterhin ist aus der GB-A-22 01 000 eine durch elastische Stahl-Streifen vorgespannte Halterung mit verbesserter Wärmeisolation für rechteckige, plattenförmige Dünnfilm-Widerstände für Luftmassenstrommesser bekannt, die zwei sich gegenüberliegende parallelepipedförmige Halteelemente aus wärmeisolierendem Material enthält, die jeweils schräg verlaufende V-förmige Nuten zum Einrasten der Widerstands-Ecken aufweisen. Es handelt sich dabei um eine verhältnismäßig aufwendige Konstruktion.

Aus der DE-PS 31 27 097 ist eine Vorrichtung zur Halterung von plattenförmig ausgebildeten elektrischen Dünnschicht-Widerständen, die aus einer dünnen Metallschicht aus einem elektrisch isolierendem Träger bestehen, bekannt, wobei der beheizbare Dünnschicht-Widerstand auf wenigstens drei spitzen Auflagen einer Halteklammer aufliegt. und von wenigstens zwei mit Spitzen versehenen Laschen der Halteklammer an die Auflagen angedrückt wird; mit dieser Vorrichtung soll die Aufgabe gelöst werden, eine Vorrichtung zur Halterung von plattenförmig ausgebildeten elektrischen Dünnschicht-Widerständen, die aus einer dünnen Metallschicht auf einen elektrisch isolierenden Träger bestehen, insbesondere zur Anwendung in Heißfilmanemometern zur Messung von Strömungsbeständigkeiten zu finden, die eine genaue und sichere Positionierung in allen drei Raumrichtungen ermöglicht, eine sehr schnelle Einstellung des thermischen Gleichgewichts gewährleistet und die durch die Fluidströmung von beheizten Dünnschicht-Widerstand abgeführte Wärmemenge nur unwesentlich beeinflußt.

Als problematisch erweist sich der verhältnismäßig aufwendige Aufbau, wonach der Dünnschicht-Widerstand an seinen vier Ecken auf vier Auflagepunkten mittels Laschen befestigt wird, wobei zwecks Fixierung und Kontaktierung zusätzliche Zungen erforderlich sind.

Weiterhin ist aus der US-PS 43 20 655 ein Massendurchflußmesser auf der Basis eines Heißwiderstandsanemometers bekannt, wobei sowohl der Heißwiderstand als auch der Vergleichswiderstand in Dünnschichttechnik auf einem elektrisch isolierenden Träger aufgebracht sind. Der Vergleichswiderstand ist in Form eines Mäanders aufgebracht.

Als problematisch erweist sich die verhältnismäßig große Wärmekapazität von Träger und aufgebrachten Widerstand, so daß das Ansprechverhalten bei raschen Durchflußänderungen sich als verhältnismäßig langsam erweist.

Weiterhin ist aus der DE 41 22 295 Al ein Luftmassenstrommesser für die Luftansaugleitung einer Brennkraftmaschine bekannt, der ein in einem Abschnitt der Ansaugleitung befindliches Rohrgehäuse mit einem Venturirohr aufweist, wobei in dem Venturirohr ein erster Widerstand angeordnet ist, dessen Temperatur und/oder Widerstand durch eine elektrische Schaltung geregelt wird, wobei die Stellgröße ein Maß für die Masse ist, sowie einen zweiten im Venturirohr langeordneten temperaturabhängigen Widerstand zur Temperaturkompensation aufweist; der erste Widerstand ist dabei als Brücke in einer rahmenbildenden Ausnehmung eines in den Venturirohr-Kanal ragenden Teils eines Chipträgers ausgebildet, während eine stromauf oder stromab der rahmenbildenden Ausnehmung angeordnete U-förmige Ausnehmung vorgesehen ist, über die der zweite Widerstand als Brücke ragt.

Als problematisch erweist sich in einer solchen Anordnung die Wärmeisolation des Widerstandes gegenüber der Halterung, bzw. der ihn umgebenen Peripherie.

Weiterhin sind aus der DE-PS 828 930 Widerstandsthermometer mit einem Substrat aus Glas oder Keramik insbesondere in Form eines Täfelchens oder einer kleinen Platte bekannt, auf die eine dünne Schicht aus einem Metall, wie beispielsweise Platin oder Nickel durch Hochvakuumverdampfung oder Kathodenzerstäubung aufgebracht wird.

Die Erfindung stellt sich die Aufgabe, ausgehend von einem Luftmassenstrommesser gemäß DE 41 22 295 Al ein Verfahren zur Befestigung wenigstens eines Widerstandes einer Sensoranordnung zur Messung der strömenden Masse flüssiger oder gasförmiger Medien mit hoher Stabilität und geringer Ansprechzeit anzugeben.

Die Aufgabe wird erfindungsgemäß durch die Merkmale des Anspruchs 1 gelöst.

Als besonders vorteilhaft erweist es sich, daß durch Kapillareinwirkung eine gute, mechanische Verbindung und isolierende Versiegelung auf einfache Weise erzielt werden kann.

In einer vorteilhaften Ausgestaltung des Verfahrens wird ein Heizwiderstand befestigt, der wenigstens eine auf einem Substrat angeordnete Widerstandsschicht aufweist, wobei jeder zum Heizwiderstand hin gerichtete Befestigungsbereich zumindest eine Auflagefläche, eine seitliche Begrenzungsfläche und eine Begrenzungsfläche in Längsrichtung zur Aufnahme eines Endbereiches des Heizwiderstandes enthält und wobei zumindest eine dieser Flächen jeweils mit dem Kantenbereich des Heizwiderstandes mechanisch fest verbunden wird; der Heizwiderstand wird zumindest an einem seiner Enden zusätzlich auf seiner Oberseite in den Befestigungsbereichen durch obere Abdeckflächen der Trägerplatte teilweise abgedeckt; dabei wird durch die Auflagefläche und die Begrenzungsflächen im Befestigungs-Bereich eine zum Heizwiderstand hin geöffnete schubfachartige Ausnehmung zur Aufnahme des Endbereichs des Heizwiderstandes gebildet, wobei die äußeren Spitzen von Auflagefläche und Begrenzungsflächen jeweils mit dem Kantenbereich des Heizwiderstandes mechanisch fest verbunden sind.

Vorteilhafterweise wird das Heizelement mittels eines an der Trägerplatte befestigten Klemmelements gegenüber der in den Eckbereichen gebildeteten Auflagefläche verspannt.

In einer bevorzugten Ausgestaltung wird das Heizelement beidseitig zwischen freien Schenkeln der Trägerplatte durch Arretierung in einer Rasthalterung gehalten, wobei die freien Schenkel mit Ausnehmungen zur Bildung einer sich elastisch zurückstellenden Aufbiegung beim Arretiervorgang versehen sind; das Heizelement wird zumindest in einem Befestigungsbereich mit der Trägerplatte mittels eines Klebers verbunden.

Bei einer weiteren vorteilhaften Ausgestaltung ist es auch möglich, das Heizelement zumindest in einem Befestigungsbereich durch Warmverformung des Werkstoffs der Trägerplatte mit dieser formschlüssig zu verbinden.

Das Substrat des Heizwiderstandes besteht vorzugsweise aus Aluminiumoxid mit einer Dicke im Bereich von 0.1 bis 0,3 mm; dabei ist der Heizwiderstand auf wenigstens einer Seite des Substrats mit einer mäanderförmigen Widerstandsschicht versehen.

Weiterhin ist es möglich, den Heizwiderstand auf zwei sich gegenüberliegenden Flächen jeweils mit einer Widerstandsschicht zu versehen.

Im folgenden ist der Gegenstand der Erfindung anhand der Figuren 1a, 1b, 1c und 2, 3, 4, 5a, 5b und 6a, 6b, 6c näher erläutert.
Figur 1a zeigt in einer perspektiven Ansicht die erfindungsgemäße Sensoranordnung;
Figur 1b zeigt schematisch einen auf einem Substrat aufgebrachten Heizwiderstand in Mäanderform;
Figur 1c zeigt schematisch einen Schnitt durch ein zweiseitig beschichtetes Substrat.
Figur 2 zeigt in einer Draufsicht die schematische Anordnung der auf dem Träger der Sensoranordnung befindlichen Einzelelemente.
Figur 3 zeigt schematisch einen Ausschnitt der Sensoranordnung mit zusätzlichen Abdeckflächen für den Heizwiderstand.
Figur 4 zeigt schematisch einen Ausschnitt der Sensoranordnung mit einer formschlüssigen Halterung des Heizwiderstandes durch Warmverformung der zugehörigen Trägerplatte.
Figur 5a zeigt schematisch einen Ausschnitt der Sensoranordnung mit durch Einrasten gehaltenem Heizwiderstand;
Figur 5b zeigt einen Querschnitt entlang der Linie AB der Figur 5a.
Figur 6a zeigt schematisch einen Ausschnitt der Sensoranordnung mit einem Klemmelement zur Halterung des Heizwiderstandes auf der Trägerplatte;
Figur 6b zeigt einen Querschnitt entlag der Linie AB der Figur 6a,
Figur 6c einen Längsschnitt entlang der Linie C-D der Figur 6a.

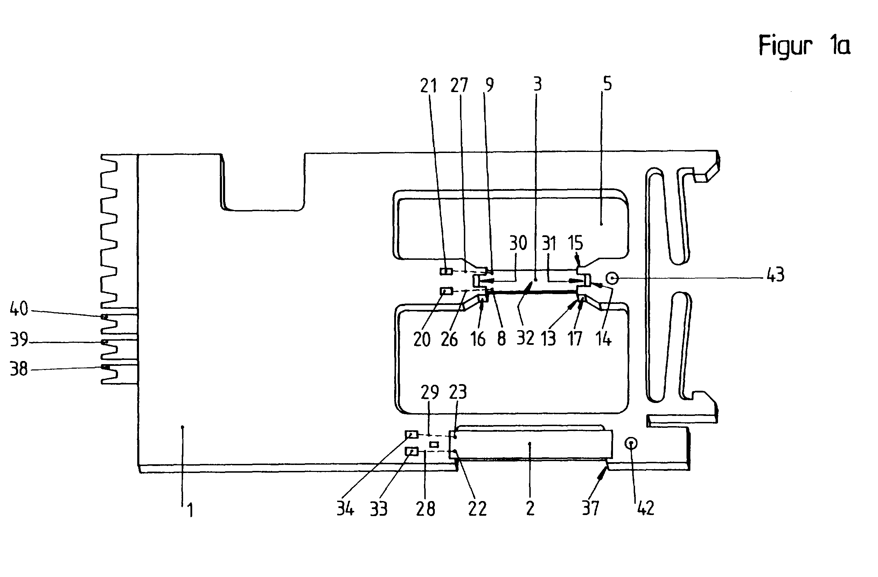

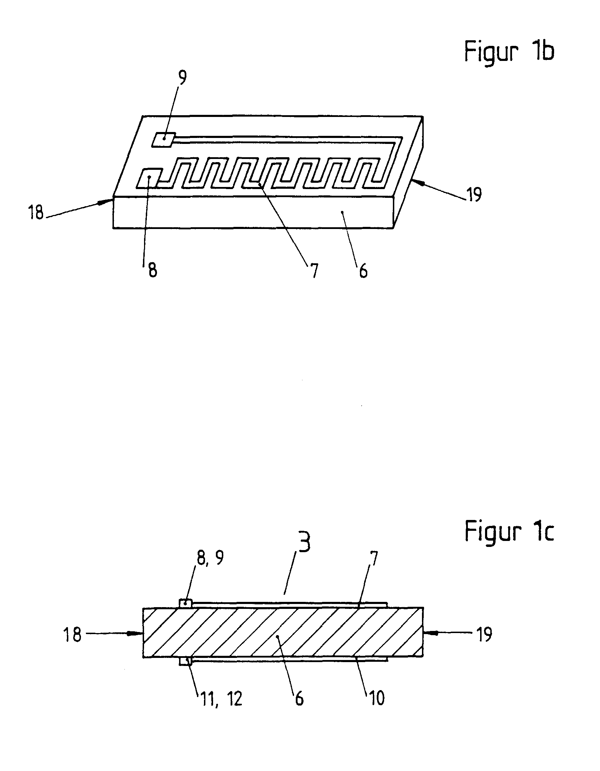

Gemäß Figur 1a weist die Sensoranordnung eine rahmenartige Trägerplatte 1 aus wärmebeständigem Kunststoff auf, die mit Ausnehmungen 5 zur Aufnahme eines Temperaturmeßwiderstandes 2 sowie eines Heizwiderstandes 3 versehen ist. Die zu messende Strömung streicht parallel zur Trägeranordnung an Meßwiderstand 2 und Heizwiderstand 3 vorbei. Der Temperatursensor 2 besteht aus einem standardmäßig verfügbaren Platin-Temperatur-Dünnschichtelement. Der Heizwiderstand 3 enthält gemäß Figur 1b eine mäanderförmig ausgebildete Widerstandsschicht 7 bzw. Widerstandsbahn auf einem Keramiksubstrat 6 mit entsprechenden Schutzschichten, wobei dieser zwecks Erzielung einer möglichst geringen Wärmeträgheit bzw. Wärmekapazität eine Dicke im Bereich von 0,1 mm bis 0,5 mm aufweist, während die Länge im Bereich von 6 bis 12 mm liegt und die Breite einen Bereich von 1,5 bis 2,5 mm umfaßt.

Als Werkstoff des Substrats 6 hat sich insbesondere Aluminiumoxid als vorteilhaft erwiesen, da es einerseits eine ausreichende Sicherheit gegen Bruchgefahr bei der Montage oder beim Betrieb gewährleistet, andererseits jedoch eine verhältnismäßig geringe Wärmekapazität bei hoher Wärmeleitfähigkeit aufweist, so daß Änderungen des Massenstroms rasch erfaßt werden können. Auf dem Substrat 6 befindet sich die mänderförmig aufgetragene Widerstandsschicht 7 mit ihren Anschlußkontakten bzw. Kontaktfeldern 8, 9, wie dies dem Ausschnitt gemäß Figur 1b zu entnehmen ist.

In einer weiteren vorteilhaften Ausgestaltung ist es möglich, den Heizwiderstand zweiseitig zu beschichten, wie dies in Figur 1c schematisch dargestellt ist; anhand dieser Figur ist erkennbar, daß der Heizwiderstand 3 auf den zwei sich gegenüberliegenden Flächen des Substrats 6 jeweils mit einer Widerstandsschicht 7, 10 versehen ist, woraus sich eine besonders hohe Empfindlichkeit ableiten läßt. Die elektrische Verbindung der zwei sich gegenüberliegenden Widerstandsschichten 7, 10 erfolgt dabei über die Kontaktfelder 8, 9, 11, 12, welche über innere elektrische Leiter im elektrisch isolierenden Rahmen der aus Kunststoff bestehenden Trägerplatte 1 so verbunden sind, daß beide Schichten in Reihe geschaltet sind. Es ist jedoch auch möglich, eine Parallelschaltung anzuwenden, um beispielsweise die Redundanz, bzw. Störsicherheit zu erhöhen.

Die eigentliche Halterung des Heizwiderstandes 3 in Trägerplatte 1 erfolgt durch schubfachartig ausgebildete Hohlprofile als Arretier- oder Befestigungsbereiche 16, 17 der Trägerplatte 1, die eine Auflagefläche 13, zwei seitliche Begrenzungsflächen 15 und eine Begrenzungsfläche 14 in Längsrichtung aufweisen und die die sich jeweils gegenüberliegenden Enden bzw. Stirnseiten 18, 19 des Heißwiderstandes 3 an ihren Außenkanten, bzw. Ecken formschlüssig arretieren. Zur Erhöhung der mechanischen Stabilität ist es vorgesehen, die äußeren Kanten bzw. Spitzen der Befestigungsbereiche 16, 17 jeweils mit dem Kantenbereich des Heißwiderstandes 3 durch Verklebung zu verbinden; die Verklebung dient zur Befestigung und Isolation des Anschlußbereichs des Heißwiderstandes 3 und ggf. auch des Anschlußbereichs des Temperaturwiderstandes 2; hierzu wird das Ende des Anschlußbereiches in eine schubfachförmige Ausnehmung der als Hohlprofil ausgebildeten Arretier- oder Befestigungselemente 16, 17 eingebracht und jeweils an einem Ende Zuleitungsdrähte 26, 27, 28, 29 der Trägerplatte 1 mit Kontaktfeldern 8, 9, 11, 12, 22, 23 von Heizwiderstand 3 und Temperaturmeßwiderstand 2 verbunden. Im Bereich der Verbindungsstellen 20, 21, 33, 34 wird ein Mittel zur Verklebung aufgetragen, das durch Kapillarwirkung längs der in Nuten geführten Zuleitungsdrähte in Richtung des Verbindungsendes des Heizwiderstands 3 und Temperaturmeßwiderstandes 2 fließt, wodurch sowohl eine Versiegelung bzw. elektrische Isolation als auch eine mechanisch feste Verbindung gebildet wird.

Im Bereich der kontaktfreien Enden von Heizwiderstand 3 und Temperaturmeßwiderstand 2 wird durch eine Vertiefung 43, 42 in der als Arretierelement dienenden Ausnehmung als Befestigungsbereich 17, 37 ein Mittel zur Verklebung eingebracht, das von der Vertiefung ausgehend über Nuten zum kontaktfreien Ende von Heizwiderstand und Temperaturmeßwiderstand fließt und dort eine mechanisch feste Verbindung bildet.

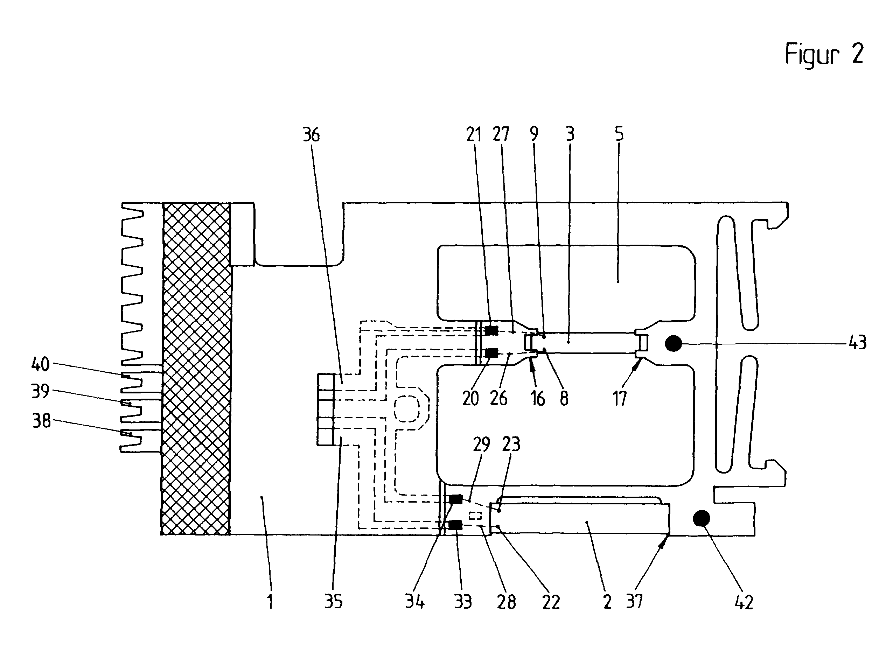

Eine übersichtliche Darstellung der flächenmäßigen Struktur ist anhand der Figur 2 gezeigt. Die Anschlußkontakte 22, 23 und 8, 9 der beiden Widerstände 2 und 3 sind nach ihrer Halterung in der Trägerplatte 1 über die sich jeweils gegenüberliegenden Kontaktfelder mittels Zuleitungsdrähten 26, 27 sowie 28, 29 mit den Kontaktfeldern 20, 21 bzw. 33, 34 der schematisch dargestellten Trägerleitbahnen 35 und 36 verbunden, wobei diese Trägerleiterbahnen wiederum mit den äußeren Anschlußkontakten 38, 39 und 40 der Trägerplatte elektrisch verbunden sind.

Die Trägerplatine 1 besteht vorzugsweise aus einem bis zu 260°C wärmebeständigem Kunststoff. Das Substrat des Heißwiderstandes 3 besteht aus Aluminiumoxid. Aufgrund der Halterung des Heizwiderstandes in den Hohlprofilen der Trägerplatte 1 ist der Wärmeübergang vom Heißwiderstand zur Trägerplatte drastisch reduziert, so daß sich ein optimales Ansprechverhalten ergibt. Da die Trägerplatte 1 in herkömmlicher Technologie erstellt wurde, erübrigen sich weitere Erläuterungen dieses Gegenstandes.

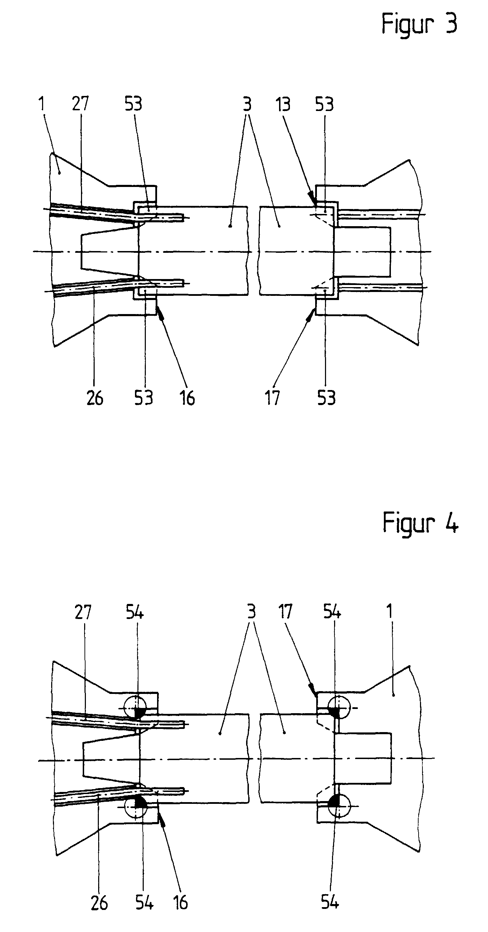

Gemäß der schematischen Darstellung in Figur 3 ist es altemativ zur Ausführungsform nach Figur 1a auch möglich, die Ecken des Heizwiderstandes 3 durch zusätzliche Abdeckflächen 53 in den Befestigungsbereichen 16, 17 abzudecken, welche den Auflageflächen 13 gegenüberliegend angeordnet sind. Die Abdeckflächen 53 sorgen für eine zusätzliche Sicherung des Heizwiderstandes, so daß beispielsweise bei einer nachlassenden Befestigung mittels Kleber die formschlüssige Halterung mittels Auflagefläche 13 und Abdeckplatte 53 die Funktionsfähigkeit des Heizwiderstandes sicherstellen würde.

Nach Figur 4 ist es jedoch auch möglich, eine rein formschlüssige Verbindung zwischen den äußersten Spitzen der schubfachartigen Befestigungselemente 16, 17 und dem jeweiligen Kantenbereich des Heizwiderstandes 3 durch Verstemmen, bzw. Zusammenpressen des durch Erwärmung verformbaren Kunststoffs der Befestigungselemente zu erzielen. Auf diese Weise ist es möglich, eine im wesentlichen gleichmäßige Erwärmung über die gesamte Länge des Heißwiderstandes 3 zu erzielen, wobei der Wärmegradient aufgrund des hohen Wärmeübergangswiderstandes im Bereich der Hohlprofile bzw. schubfachartigen Befestigungsbereiche 16, 17 äußerst gering ist. Der zugehörige Temperaturmeßwiderstand kann dabei in konventioneller Anordnung mit der Trägerplatte befestigt und mittels Kontaktfelder kontaktiert sein, es ist jedoch auch möglich, den Temperaturmeßwiderstand in Hohlprofilen zu arretieren, wie es für den Heizwiderstand bereits beschrieben ist. Sowohl der Temperaturmeßwiderstand als auch der Heizwiderstand 3 weisen eine mäanderförmige Struktur der Widerstandsbahn auf, wobei die beiden Anschlußkontakte im schubfachförmigen Teil gegenüberliegend angeordnet sind. Die Kontakte zum Heizwiderstand 3, bzw. des Temperaturmeßwiderstandes sind über eine in der Trägerplatte angeordnete Leiterbahnanordnung herkömmlicher Bauart mittels der äußeren Anschlußkontakte mit der Schaltungsanordnung der Sensoranordnung verbunden, wie dies bereits anhand der Figuren 1 und 2 erläutert ist.

Gemäß Figur 4 befinden sich die Bereiche der formschlüssigen Halterung zwischen der Auflagefläche 13 und der Abdeckfläche 53, sie sind symbolisch mit Bezugsziffer 54 bezeichnet.

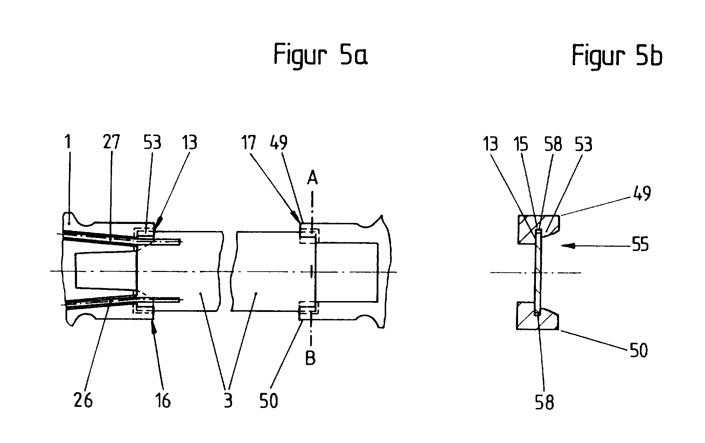

Figur 5a zeigt eine weitere Halterungsmöglichkeit des Heizwiderstandes durch ein- oder zweiseitige Einrastung; gemäß Figur 5a wird der Heizwiderstand 3 im Befestigungsbereich 16 durch Auflagefläche, seitliche Begrenzungsfläche und Begrenzungsfläche in Längsrichtung sowie durch Abdeckfläche 53 an einem Ende praktisch formschlüssig gehalten, während die Halterung im Befestigungsbereich 17 durch Einrasten der Kanten am Ende des Heizwiderstandes 3 erfolgt; zur besseren Anschaulichkeit ist anhand Figur 5b ein Querschnitt entlang der Linie AB der Figur 5a dargestellt, woraus erkennbar ist, daß der Heizwiderstand 3 entlang der Pfeilrichtung 55 in den durch die elastischen Schenkel 49, 50 gebildeten Befestigungsbereich 17 durch Einpressen eingebracht wird und in der durch Auflagefläche 13, seitliche Begrenzungsfläche 15 und Abdeckfläche 53 gebildeten Nut 58 arretiert wird; gegen längsseitiges Verrutschen ist die Begrenzungsfläche 14 gemäß Figur 5a vorgesehen.

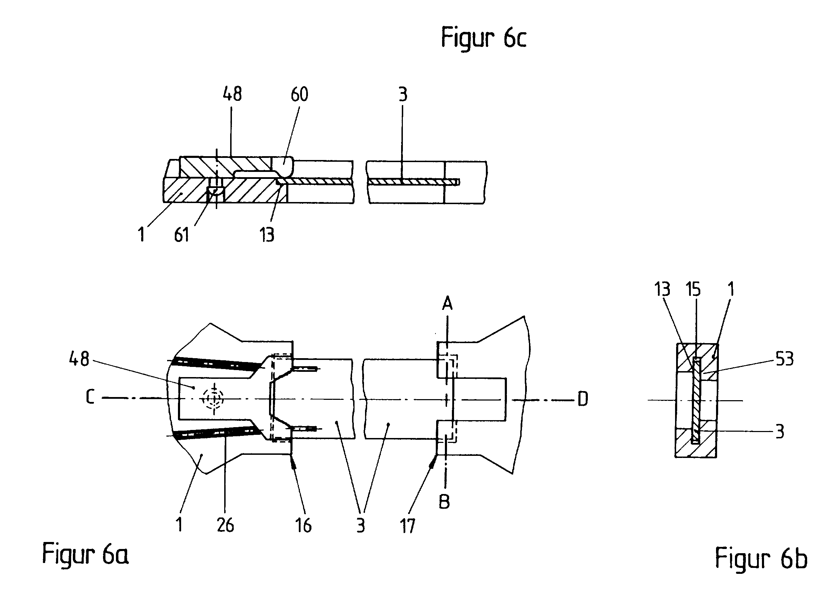

Gemäß Figur 6a ist es weiterhin möglich, eine Halterung des Heizwiderstandes 3 durch ein auf der Trägerplatte befestigtes Klemmelement 48 vorzusehen, wobei ähnlich wie in Figur 5a beschrieben ist, ein Ende des Heizwiderstandes 3 in eine praktisch formschlüssige Halterung des Befestigungsbereichs 17 gebracht ist, während das andere Ende im Befestigungsbereich 16 sich in einer durch seitliche Begrenzungsfläche, Begrenzungsfläche in Längsrichtung und Auflagefläche vorgesehenen Ausnehmung der Trägerplatte 1 angeordnet ist, das durch die federnde Zunge 60 eines mittels Befestigungsbolzen 61 mit der Trägerplatte 1 verbundenen Klemmelements 48 versehen ist; das Klemmelement ist dabei so eingestellt, daß die fedemde Zunge 60 auf der Oberfläche des Heizwiderstands 3 im Befestigungsbereich 16 einen Druck ausübt, so daß Heizwiderstand 3 in diesen Befestigungsbereich praktisch durch eine kraftschlüssige Halterung arretiert ist.

Figur 6b zeigt einen Schnitt entlang der Linie AB, aus dem die formschlüssige Halterung im Befestigungsbereich 17 erkennbar ist; Figur 6c zeigt einen Längsschnitt entlang der Linie CD, aus dem Klemmelement 48 mit seiner fedemden Zunge 60 erkennbar ist, welcher das Ende des Heizwiderstandes 3 gegen die Auflagefläche 13 preßt; das Klemmelement 48 ist durch Befestigungsbolzen 61 mit der Trägerplatte 1 mechanisch fest verbunden.

## Patentansprüche

1. Verfahren zur Befestigung und Isolation wenigstens eines Anschlußbereichs eines langgestreckten Heizwiderstandes (3) und/oder eines langgestreckten Temperaturmeßwiderstandes (2) in Befestigungsbereichen (16, 17) auf einer rahmenartigen Trägerplatte einer Sensoranordnung für Heißfilmanemometer, dadurch gekennzeichnet, daß ein Heizwiderstand (3) und/oder Temperaturmeßwiderstand (2) mit ihren jeweiligen Enden in eine schubfachartige Ausnehmung als Arretierelement eingebracht werden und daß jeweils an einem Ende von Heizwiderstand (3) und/oder Temperaturmeßwiderstand (2) Kontaktfelder (8, 9, 11, 12, 22, 23) mit Zuleitungsdrähten (26, 27, 28, 29) durch Schweißen verbunden werden, daß im Bereich der Verbindungsstellen (20, 21, 33, 34) ein Mittel zur Verklebung aufgetragen wird, das durch Kapillarwirkung längs der in Nuten geführten Zuleitungsdrähte (26, 27, 28, 29) in Richtung des Verbindungs-Endes des Heizwiderstands (3) und/oder des Temperaturmeßwiderstands (2) fließt und dabei sowohl eine Versiegelung als auch eine mechanisch feste Verbindung bildet und daß im Bereich der kontaktfreien Enden von Heizwiderstand (3) und/oder Temperaturmeßwiderstand (2) in eine Vertiefung (42, 43) in einem als Arretierelement dienenden Befestigungsbereich (17, 37) ein Mittel zur Verklebung eingebracht wird, das von der Vertiefung ausgehend über Nuten zum Endbereich von Heizwiderstand (3) und/oder Temperaturmeßwiderstand (2) fließt und dort eine mechanisch feste Verbindung bildet.

2. Verfahren nach Anspruch 1, dadurch gekennzeichnet, daß das Heizelement (3) mittels eines an der Trägerplatte (1) befestigten Klemmelements (48) gegenüber der in den Eckbereichen gebildeten Auflagefläche (13) verspannt wird.

3. Verfahren nach Anspruch 1 oder 2, dadurch gekennzeichnet, daß das Heizelement (3) beidseitig zwischen freien Schenkeln (49, 50) der Trägerplatte (1) durch Arretierung in einer Rasthalterung gehalten wird, wobei die freien Schenkel (49, 50) mit Ausnehmungen (51) zur Bildung einer sich elastisch zurückstellenden Aufbiegung beim Arretiervorgang versehen sind und das Heizelement (3) zumindest in einem Befestigungsbereich (16, 17) mit der Trägerplatte (1) mittels eines Klebers (24) verbunden wird.

4. Verfahren nach Anspruch 1, dadurch gekennzeichnet, daß das Heizelement (3) zumindest in einem Befestigungsbereich (16, 17) durch Warmverformung des Werkstoffs der Trägerplatte (1) mit dieser formschlüssig verbunden wird.

## Claims

1. A method for the fastening and insulation at least of one connecting region of an elongated heating resistance (3) and/or of an elongated temperature measurement resistance (2) in fastening regions (16, 17) on a frame-like support plate of a sensor arrangement for hot film anemometers, characterised in that a heating resistance (3) and/or temperature measurement resistance (2) are introduced by their respective ends into a drawer-like recess as arresting member and that respectively at one end of heating resistance (3) and/or temperature measurement resistance (2) contact panels (8, 9, 11, 12, 22, 23) are connected with lead-in wires (26, 27, 28, 29) by welding, that in the region of the connection points (20, 21, 33, 34) a means is applied for glueing, which flows by capillary effect along the lead-in wires (26, 27, 28, 29) directed in grooves in the direction of the connection end of the heating resistance (3) and/or of the temperature measurement resistance (2) and in so doing forms both a seal and also a mechanically firm connection and that in the region of the contact-free ends of heating resistance (3) and/or temperature measurement resistance (2) a means for glueing is introduced into a depression (42, 43) in a fastening region (17, 37) serving as arresting member, which means, proceeding from the depression, flows via grooves to the end region of heating resistance (3) and/or temperature measurement resistance (2) and forms there a mechanically firm connection.

2. The method according to Claim 1, characterised in that the heating member (3) is clamped by means of a clamping member (48) fastened to the support plate (1), with respect to the bearing surface (13) formed in the comer regions.

3. The method according to Claim 1 or 2, characterised in that the heating member (3) is held on both sides between free shanks (49, 50) of the support plate (1) by arresting in a detent mounting, the free shanks (49, 50) being provided with recesses (51) for the formation of a bend, restoring itself elastically, during the arresting process, and the heating member (3) being connected at least in a fastening region (16, 17) with the support plate (1) by means of an adhesive (24).

4. The method according to Claim 1, characterised in that the heating member (3), at least in a fastening region (16, 17) by hot deformation of the material of the support plate (1) is connected with the latter in a form-fitting manner.

## Revendications

1. Procédé de fixation et d'isolation d'au moins une région de raccordement d'une résistance chauffante (3) allongée et/ou d'une résistance de mesure de température (2) allongée dans des régions de fixation (16, 17) sur une plaque support sous forme de cadre d'un capteur pour un anémomètre à film chaud, caractérisé en ce qu'une résistance chauffante (3) et/ou une résistance de mesure de température (2) sont disposées avec leurs extrémités respectives dans un évidement en forme de tiroir servant d'élément de blocage et en ce que respectivement à une extrémité de la résistance chauffante (3) et/ou de la résistance de mesure de température (2), des plots de contact (8, 9, 11, 12, 22, 23) sont reliés par soudure à des fils d'amenée (26, 27, 28, 29), en ce qu'à proximité des points de liaison (20, 21, 33, 34) est déposé un agent de collage, qui s'écoule par capillarité le long des fils d'amenée (26, 27, 28, 29) disposés dans des rainures en direction de l'extrémité de liaison de la résistance chauffante (3) et/ou de la résistance de mesure de température (2), et forme non seulement un scellement, mais également une liaison mécanique et en ce qu'à proximité des extrémités sans contacts de la résistance chauffante (3) et/ou de la résistance de mesure de température (2) est déposé, dans une cavité (42, 43) dans une région de fixation (17,37) servant d'élément d'arrêt, un agent de collage, qui s'écoule depuis la cavité par l'intermédiaire des rainures vers la région d'extrémité de la résistance chauffante (3) et/ou de la résistance de mesure de température (2) et y forme une liaison mécanique solide.

2. Procédé selon la revendication 1, caractérisé en ce que l'élément chauffant (3) est déformé au moyen d'un élément de pince (48) fixé à la plaque support (1) vis-à-vis de la surface d'appui (13) formée dans les régions de coin.

3. Procédé selon la revendication 1 ou 2, caractérisé en ce que l'élément chauffant (3) est maintenu bilatéralement entre des branches libres (49, 50) de la plaque support (1) par blocage dans un support par encliquetage, les branches libres (49, 50) étant munies d'évidements (51) en vue de la formation d'une flexion de rappel élastique lors de l'opération de blocage et l'élément chauffant (3) est relié au moins dans une région de fixation (16, 17) à la plaque support (1) au moyen d'une colle (24).

4. Procédé selon la revendication 1, caractérisé en ce que l'élément chauffant (3) au moins dans une zone de fixation (16, 17) est relié par conformation avec celle-ci par déformation à chaud du matériau de la plaque support (1).
